# EUROPEAN PATENT APPLICATION

(11) **EP 2 461 259 A2**
(43) Date of publication of application: **06.06.2012**
(21) Application number: 11184681.2
(22) Date of filing: 11.10.2011
(51) Int. Cl.: G06F 17/30

(54) **Information processing device and method, information processing system, and program**

(30) Priority: 09.11.2010 JP 2010250615
(71) Applicant: Sony Corporation, Tokyo 108-0075 (JP)
(72) Inventor: Sakamoto, Takayuki, Minato-ku, Tokyo 108-0075 (JP); Mukaiyama, Ryo, Minato-ku, Tokyo 108-0075 (JP)
(74) Representative: Robinson, Nigel Alexander Julian

(57) **Abstract**

An information processing device includes an acquisition unit configured to acquire a user specified attribute value which is an attribute value specified by a user from a plurality of attribute values of an attribute assigned based on a characteristic amount of content, and a category determining unit configured to determine a recommended category which is a category which recommended content belongs to based on compatibility of a plurality of categories and the user specified attribute value in compatibility information which shows compatibilities of a plurality of categories for categorizing content and the plurality of attribute values.

## Description

The present disclosure relates to an information processing device and method, an information processing system, and a program, and in particular, to an information processing device and method, an information processing system, and a program which performs recommendation of content.

In the past, a system was proposed where a user specifies a mood such as "cheerful", "calming", or "intense", and music is recommended according to the mood specified from the music held therein.

In such a system, in order to recommend music that more closely matches a request of a user, for example, an improvement in accuracy in the extraction of characteristic amounts from music data using signal analysis was considered (for example, Japanese Unexamined Patent Application Publication No. 2007-121456). In addition, for example, an improvement in accuracy when clustering music data using mood based on the characteristic amounts of the music data was considered (for example, Japanese Unexamined Patent Application Publication No. 2008-65055).

However, in such a system, it is not just that the accuracy of the extraction of the characteristic amounts is not necessarily sufficient due to the limitations in system capabilities, processing time, technical level, or the like, but also, as a result, there are cases where music is recommended which does not match the mood subjectively perceived by a user.

Even then, in a case of recommending from among music held by a user, since it is music which was acquired originally due to being chosen by a user, there is a high possibility that music which does not match the mood of the user is permitted to some extent.

However, in a case of recommending unknown music which is in a recommendation server or the like and which is not held by a user, the degree that a user will permit music which does not match the mood of the user decreases and there is a high possibility that the user will experience discomfort.

It is desirable if content such as music data is able to be appropriately recommended to a user.

An information processing device according to a first embodiment of the disclosure includes: an acquisition unit which acquires a user specified attribute value which is an attribute value specified by a user from a plurality of attribute values of an attribute assigned based on a characteristic amount of content, and a category determining unit which determines a recommended category which is a category which recommended content belongs to based on compatibility of a plurality of categories and the user specified attribute value in compatibility information which shows the compatibility of a plurality of categories for categorizing content and the plurality of attribute values.

The category determining unit may determine the recommended category based on compatibility of the plurality of categories and the user specified attribute value in the compatibility information and based on preference information which shows preferences of the user with regard to the plurality of categories.

The compatibility information shows a compatibility of the plurality of categories and the plurality of attribute values, the preference information shows a preference of the user with regard to the plurality of categories, and the category determining unit may determine the recommended category with the category, where the compatibility with the user specified attribute value and the preference of the user are high, given priority.

The category determining unit may select the compatibility information which corresponds to the preferences of the user shown in the preference information from a plurality of the compatibility information and may determine the recommended category based on the selected compatibility information.

A recommendation content determining unit may be further provided which determines content to be recommended from among content which belongs to the recommended categories and is assigned with the user specified attribute value.

An evaluation by the user with regard to the recommended content may be acquired in the acquisition unit and a compatibility information updating unit, which updates the compatibility information based on the evaluation by the user, may be further provided.

The user specified attribute value and the preference information may be acquired from another information processing device in the acquisition unit and a recommendation content determining unit, which determines content to be recommended from among content which belongs to the recommended categories and is assigned with the user specified attribute value, and a transmission unit, which transmits the recommended content to the other information processing device, may be further provided.

A transmission unit, which transmits information which includes the user specified attribute value and the recommended category to another information processing device, and a reception unit, which receives content selected from among content which belongs to the recommended categories and is assigned with the user specified attribute value from the other information processing device, may be further provided.

The reception unit may receive compatibility information from the other information processing device.

An information processing method according to a first embodiment of the disclosure includes: acquiring a user specified attribute value which is an attribute value specified by a user from a plurality of attribute values of an attribute assigned based on a characteristic amount of content, and determining a recommended category which is a category which recommended content belongs to based on compatibility of a plurality of categories and the user specified attribute value in compatibility information which shows the compatibility of a plurality of categories for categorizing content and the plurality of attribute values, using an information processing device.

A program according to a first embodiment of the disclosure which makes a computer execute: acquiring a user specified attribute value which is an attribute value specified by a user from a plurality of attribute values of an attribute assigned based on a characteristic amount of content, and determining a recommended category which is a category which recommended content belongs to based on compatibility of a plurality of categories and the user specified attribute value in compatibility information which shows the compatibility of a plurality of categories for categorizing content and the plurality of attribute values.

An information processing system according to a second embodiment of the disclosure which is configured by a first information processing device and a second information processing device, where the first information processing device includes an acquisition unit which acquires a user specified attribute value which is an attribute value specified by a user from a plurality of attribute values of an attribute assigned based on a characteristic amount of content, a first transmission unit which transmits information which includes the user specified attribute value to the second information processing device, and a first reception unit which receives content transmitted from the second information processing device, and the second information processing device includes a second reception unit which receives information which includes the user specified attribute value transmitted from the first information processing device, a category determining unit which determines a recommended category which is a category which recommended content belongs to based on compatibility of a plurality of categories and the user specified attribute value in compatibility information which shows the compatibility of a plurality of categories for categorizing content and the plurality of attribute values, a recommendation content determining unit which determines content to be recommended from among content which belongs to the recommended categories and assigned with the user specified attribute value, and a second transmission unit which transmits the recommended content to the first information processing device.

An information processing method according to a second embodiment of the disclosure includes: acquiring a user specified attribute value which is an attribute value specified by a user from a plurality of attribute values of an attribute assigned based on a characteristic amount of content, and transmitting information which includes the user specified attribute value to a second information processing device, using a first information processing device; receiving information which includes the user specified attribute value transmitted from the first information processing device, determining a recommended category which is a category which recommended content belongs to based on compatibility of a plurality of categories and the user specified attribute value in compatibility information which shows the compatibility of a plurality of categories for categorizing content and the plurality of attribute values, determining content to be recommended from among content which belongs to the recommended categories and assigned with the user specified attribute value, and transmitting the recommended content to the first information processing device, using the second information processing device; and receiving content transmitted from the second information processing device using the first information processing device.

An information processing system according to a third embodiment of the disclosure which is configured by a first information processing device and a second information processing device, where the first information processing device includes an acquisition unit which acquires a user specified attribute value which is an attribute value specified by a user from a plurality of attribute values of an attribute assigned based on a characteristic amount of content, a category determining unit which determines a recommended category which is a category which recommended content belongs to based on compatibility of a plurality of categories and the user specified attribute value in compatibility information which shows the compatibility of a plurality of categories for categorizing content and the plurality of attribute values, a first transmission unit which transmits information which includes the user specified attribute value and the recommended category to the second information processing device, and a first reception unit which receives content transmitted from the second information processing device, and the second information processing device includes a second reception unit which receives information which includes the user specified attribute value and the recommended category transmitted from the first information processing device, a recommendation content determining unit which determines content to be recommended from among content which belongs to the recommended categories and assigned with the user specified attribute value, and a second transmission unit which transmits the recommended content to the first information processing device.

An information processing method according to a third embodiment of the disclosure includes: acquiring a user specified attribute value which is an attribute value specified by a user from a plurality of attribute values of an attribute assigned based on a characteristic amount of content, determining a recommended category which is a category which recommended content belongs to based on compatibility of a plurality of categories and the user specified attribute value in compatibility information which shows the compatibility of a plurality of categories for categorizing content and the plurality of attribute values, and transmitting information which includes the user specified attribute value and the recommended category to a second information processing device, using a first information processing device; receiving information which includes the user specified attribute value and the recommended category transmitted from the first information processing device, determining content to be recommended from among content which belongs to the recommended categories and assigned with the user specified attribute value, and transmitting the recommended content to the first information processing device; and receiving content transmitted from the second information processing device using the first information processing device.

In the first embodiment of the disclosure, a user specified attribute value, which is an attribute value specified by a user from a plurality of attribute values of an attribute assigned based on a characteristic amount of content, is acquired, and a recommended category which is a category which recommended content belongs to is determined based on compatibility of a plurality of categories and the user specified attribute value in compatibility information which shows the compatibility of a plurality of categories for categorizing content and the plurality of attribute values, using an information processing device.

In the second embodiment of the disclosure; using a first information processing device, a user specified attribute value, which is an attribute value specified by a user from a plurality of attribute values of an attribute assigned based on a characteristic amount of content, is acquired, and information which includes the user specified attribute value is transmitted to a second information processing device; using the second information processing device, information, which includes the user specified attribute value transmitted from the first information processing device, is received, a recommended category which is a category which recommended content belongs to is determined based on compatibility of a plurality of categories and the user specified attribute value in compatibility information which shows the compatibility of a plurality of categories for categorizing content and the plurality of attribute values, content to be recommended is determined from among content which belongs to the recommended categories and assigned with the user specified attribute value, and the recommended content is transmitted to the first information processing device; and using the first information processing device, content transmitted from the second information processing device is received.

In the third embodiment of the disclosure; using a first information processing device, a user specified attribute value, which is an attribute value specified by a user from a plurality of attribute values of an attribute assigned based on a characteristic amount of content, is acquired, a recommended category which is a category which recommended content belongs to is determined based on compatibility of a plurality of categories and the user specified attribute value in compatibility information which shows the compatibility of a plurality of categories for categorizing content and the plurality of attribute values, and information which includes the user specified attribute value and the recommended category is transmitted to a second information processing device; using the second information processing device, information, which includes the user specified attribute value and the recommended category transmitted from the first information processing device, is received, content to be recommended is determined from among content which belongs to the recommended categories and assigned with the user specified attribute value, and the recommended content is transmitted to the first information processing device; and using the first information processing device, content transmitted from the second information processing device is received.

According to the first to the third embodiments, appropriate content is able to be recommended to a user.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:
Fig. 1 is a block diagram illustrating an information process system according to an embodiment of the disclosure;
Fig. 2 is a diagram illustrating an example of a user preference table;
Fig. 3 is a diagram illustrating an example of a compatibility table;
Fig. 4 is a block diagram illustrating a configuration example of a function of a client;
Fig. 5 is a block diagram illustrating a configuration example of a function of a recommendation server;
Fig. 6 is a flow chart for describing a music request and reproduction process using a client;
Fig. 7 is a diagram illustrating an example of a mood selection screen;
Fig. 8 is a diagram illustrating an example of a reproduction screen;
Fig. 9 is a diagram for describing an updating method of the user preference table;
Fig. 10 is a flow chart for describing a request reply process using a recommendation server;
Fig. 11 is a diagram for describing a creating method of an extraction probability table;
Fig. 12 is a diagram for describing a creating method of an extraction probability table; and
Fig. 13 is a block diagram illustrating a configuration example of a computer.

Below, an embodiment of the disclosure will be described. Here, the description will be performed in the order below.
1. Embodiment of Disclosure
2. Modified Examples

### 1. Embodiment of Disclosure

### Configuration Example of Information Processing System 1

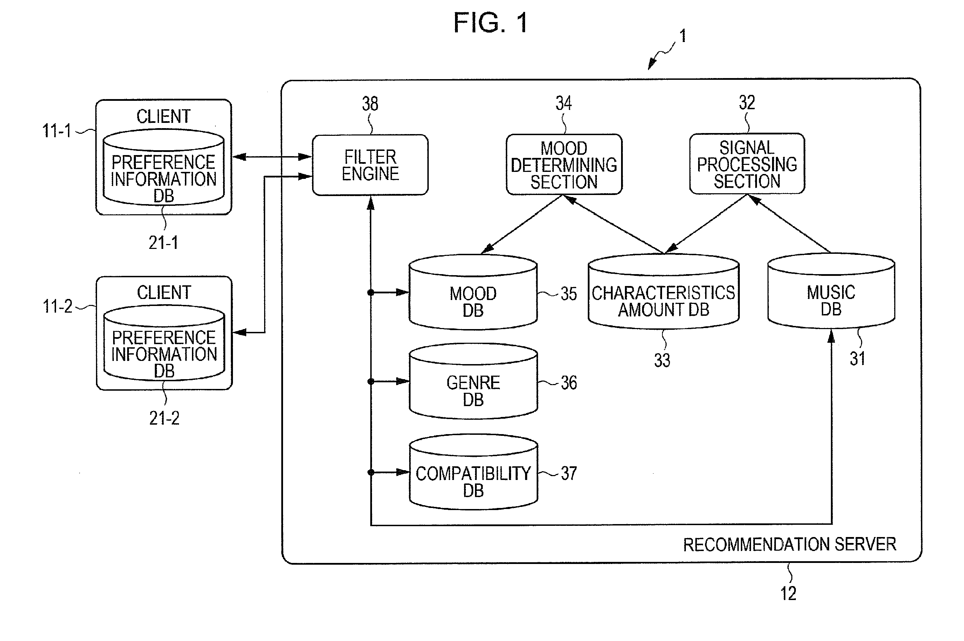

Fig. 1 is a block diagram illustrating a configuration example of an information process system according to an embodiment of the disclosure.

An information processing system 1 is configured by clients 11-1 and 11-2 and a recommendation server 12. The information processing system 1 is a system where the recommendation server 12 determines a recommended music track with regard to a request from the clients 11-1 and 11-2 and a response, which includes music data of the determined recommended music track, is provided to the clients 11-1 and 11-2.

Here, the number of clients shown in Fig. 1 is one example and it is possible for an arbitrary number to be set. In addition, below, in a case where it is not necessary that the clients 11-1 and 11-2 are distinguished as separate, the clients 11-1 and 11-2 will be referred to simply as the client 11. Furthermore, below, in a case where it is not necessary that preference information DBs (databases) 21-1 and 21-2, which are respectively held by the clients 11-1 and 11-2, are distinguished as separate, the preference information DBs 21-1 and 21-2 will be referred to simply as the preference information DB 21.

The client 11 is a device which transmits a request to the recommendation server 12, receives a response with regard to the request from the recommendation server 12, and performs reproduction of the music data included in the response. The client 11 is configured by, for example, a device which is able to reproduce music data such as a personal computer, a music player, a mobile phone, a PDA (Personal Digital Assistant), or the like.

In addition, the client 11 holds the preference information DB 21 which shows the preferences of a user who uses the client 11. The preference information DB 21 includes a user preference table which shows the preferences of a user with regard to genres used in the classification of music or artists.

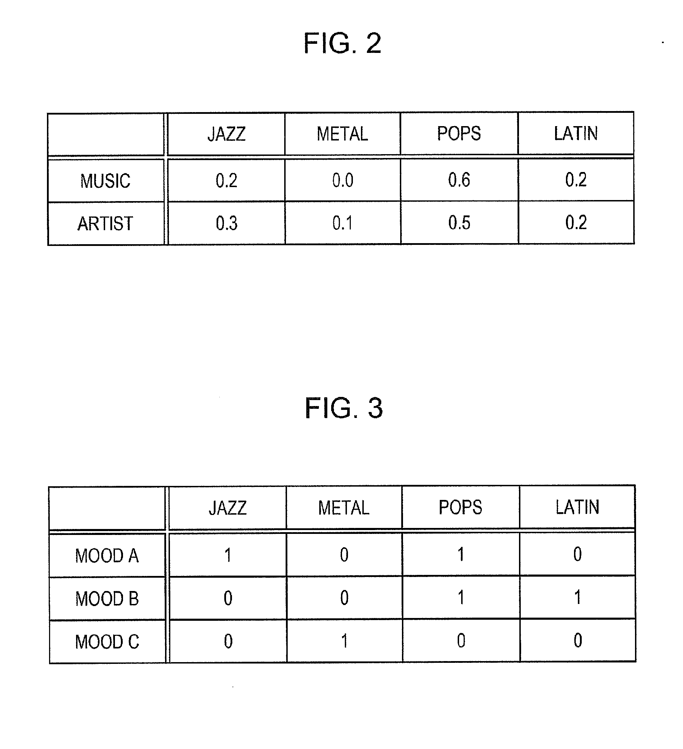

Fig. 2 is a diagram illustrating an example of a user preference table. In the example, the preferences of a user with regard to the four types of genres of jazz, metal, pops, and latin are shown by numerical values which are divided up by music and artist. A higher numerical value expresses a higher preference of the user, and a lower numerical value expresses a lower preference of the user. For example, in regard to the genre of music (referred to below as music genre), the preference with regard to pops is the highest, the preferences with regard to jazz and latin are the next highest, and the preference with regard to metal is the lowest. In addition, in regard to the genre of artist (referred to below as artist genre), the preference with regard to pops is the highest followed by jazz, latin and metal.

In addition, in the user preference table, the total value of the preferences with regard to music genre and the total value of the preferences with regard to artist genre are respectively normalized so as to be equal to one.

Here, below, description of a series of processes of the information processing system 1 will be performed while using the user preference table of Fig. 2 as an appropriate specific example.

The recommendation server 12 is configured to include a music DB (database) 31, a signal processing section 32, a characteristics amount DB (database) 33, a mood determining section 34, a mood DB (database) 35, a genre DB (database) 36, a compatibility DB 37, and a filter engine 38.

The music DB 31 holds a plurality of music data and meta information corresponding to the respective music data. The meta information includes, for example, an artist's name, a title, cover art from an album or a single where the music is recorded, and the like.

The signal processing section 32 performs signal processing on the respective music data held by the music DB 31 and extracts the music characteristic amount used for determining the mood of music data. The music characteristic amount includes, for example, tempo, pitch, chord progression, and the like. The signal processing section 32 registers identification information (referred to below as music ID) for identifying the respective music data and music characteristic amount of the respective music data in the characteristic amount DB 33 so as to correspond.

The mood determining section 34 determines the mood of the respective music data based on the music characteristic amounts registered in the characteristic amount DB 33. The moods are classified into, for example, "cheerful", "dark", "intense", "relaxing", "gentle", "cold" or the like. The mood determining section 34 registers the music ID of the respective music data and the mood information of the respective music data in the mood DB 35 so as to correspond. Here, two or more moods may be assigned to one of the music data and the number of moods assigned according to the music data may be changed.

In the genre DB 36, the music genre and artist genre of the respective music data is registered to correspond to the music ID. Here, the music genre is assigned to the music data and the artist genre is assigned to an artist who plays music or sings. Accordingly, there are cases where the music genre and the artist genre with regard to the same music data do not match.

In addition, the setting of the genre with regard to music and artists is, for example, performed manually. In addition, two or more genre may be set with regard to one music or artist, and the number of genre set according to music or artist may be changed.

The compatibility DB 37 includes a compatibility table which shows compatibility of each combination of the genre and the mood assigned to the music data.

Fig. 3 shows an example of a compatibility table. In this example, the compatibilities, with regard to each combination of the four types of genres of jazz, metal, pops, and latin and three types of mood of moods A to C, are shown by numerical values. The compatibilities are expressed by two values of zero or one, the combinations with good compatibility are set as one, and the combinations with bad compatibility are set as zero. For example, the combination of jazz and mood A has a compatibility of one and thus has good compatibility, and the combination of metal and mood B has a compatibility of zero and thus has bad compatibility.

Here, compatibility used here shows the degree to which each genre of music or each genre of artist matches each mood and is determined from a subjective impression of each genre and a subjective impression of each mood. For example, when a mood which gives a calming impression is set as "relaxing", there are many cases where music of the genre of metal or punk along with the lyrics does not match with the relaxing mood. Accordingly, metal or punk and relaxing are determined to have bad compatibility and the compatibility is set as zero. On the other hand, music of the genre of jazz or easy listening often has a soft mood and there are many cases where music of the genre of jazz or easy listening matches with the relaxing mood. Accordingly, jazz or easy listening and relaxing are determined to have good compatibility and the compatibility is set as one.

In addition, the setting of the compatibility in the compatibility table is, for example, performed manually. Here, the compatibility may be expressed not by two values but by three or more values.

Here, below, description of a series of processes of the information processing system 1 will be performed while using the compatibility table of Fig. 3 as an appropriate specific example.

The filter engine 38 searches the music data which matches a condition included in a request from the client 11 and determines a recommended music track from the searched music using the mood DB 35, the genre DB 36, and the compatibility DB 37. In addition, the filter engine 38 acquires the music data and the meta information of the recommended music track from the music DB 31 and acquires the music genre and the artist genre of the recommended music track from the genre DB 36. Then, the filter engine 38 transmits a response which includes the music data, the meta information, and the genre information of the recommended music track to the client 11.

Here, the communication method between the client 11 and the recommendation server 12 is not limited to a specific method and it is possible for an appropriate method to be adopted irrespective of wired or wireless. In addition, for example, connection between the client 11 and the recommendation server 12 may be connection via a network such as the internet or may be direct connection not via a network.

### Configuration Example of Client 11

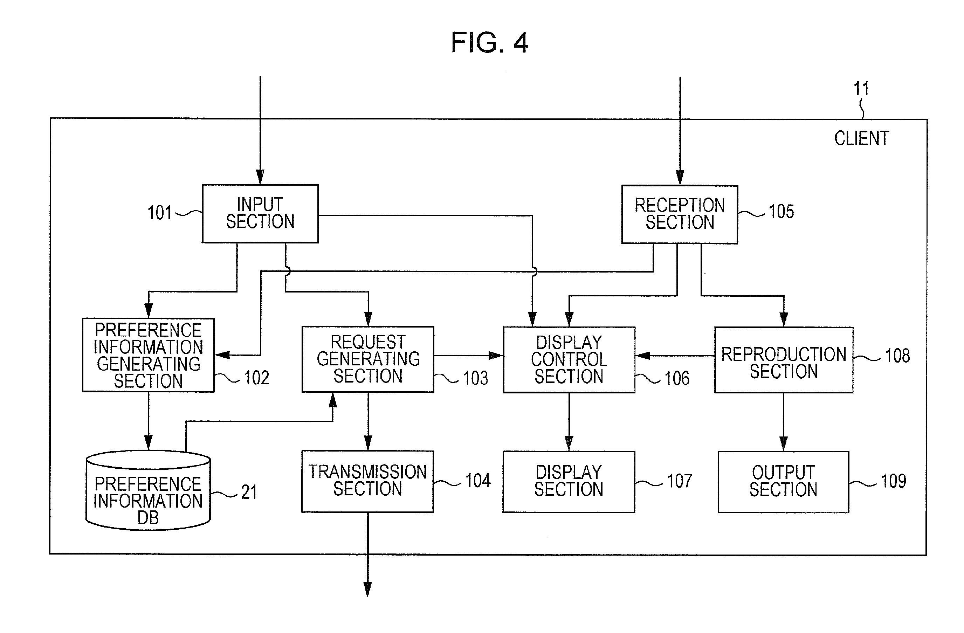

Fig. 4 is a block diagram illustrating a configuration example of a function of the client 11. The client 11 is configured to include the preference information DB 21, an input section 101, a preference information generating section 102, a request generating section 103, a transmission section 104, a reception section 105, a display control section 106, a display section 107, a reproduction section 108, and an output section 109.

The input section 101 is configured by, for example, an input device such as a switch, a key, a button, a mouse, a touch panel, or the like, and is used for inputting of commands of a user with regard to the client 11. The commands of a user input via the input section 101 are supplied to the preference information generating section 102, the request generating section 103, and the display control section 106 when necessary.

The preference information generating section 102 performing generating and updating of the user preference table included in the preference information DB 21 based on evaluations with regard to music input by the user via the input section 101.

The request generating section 103 generates a request, which includes a mood specified by the user via the input section 101 (referred to below as user specified mood) and the user preference table included in the preference information DB 21, to the recommendation server 12 and supplies the request to the transmission section 104. In addition, the request generating section 103 notifies the display control section 106 that the request has been transmitted to the recommendation server 12.

The transmission section 104 performs communication with the recommendation server 12 using a predetermined method and transmits the request to the recommendation server 12.

The reception section 105 performs communication with the recommendation server 12 using a predetermined method and receives the response transmitted from the recommendation server 12. In addition, the reception section 105 supplies the genre information of the recommended music track included in the response to the preference information generating section 102, supplies the meta information to the display control section 106, and supplies the music data to the reproduction section 108.

The display control section 106 controls the display section 107 and displays various screens such as an operation screen or a music data reproduction screen on the display section 107.

The display section 107 is configured by, for example, a display device such as an organic EL display, an LCD (Liquid Crystal Display), or the like.

The reproduction section 108 performs reproduction of the music data and supplies sound data acquired as a result to the output section 109. In addition, the reproduction section 108 appropriately notifies the display control section 106 of the reproduction state of the music data.

The output section 109 is configured by, for example, a speaker, a sound output terminal, or the like. Then, the output section 109 performs output of sound based on the sound data or outputs the sound data to another device connected to the output section 109 (for example, headphones, a speaker, another sound reproduction device, or the like).

### Configuration Example of Filter Engine 38

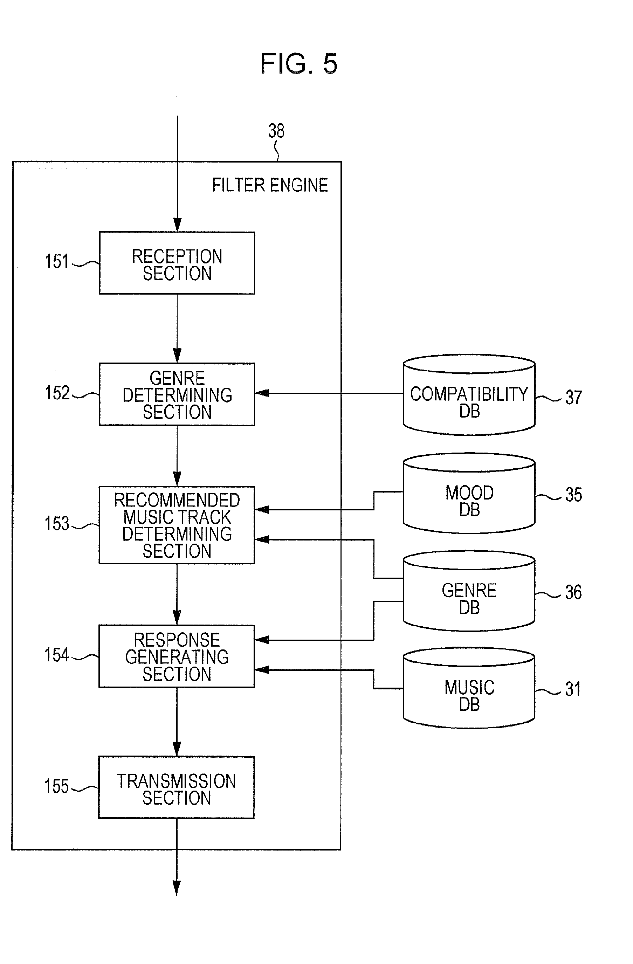

Fig. 5 is a block diagram illustrating a configuration example of a function of the filter engine 38 of the recommendation server 12. The filter engine 38 is configured by including a reception section 151, a genre determining section 152, a recommended music track determining section 153, a response generating section 154, and a transmission section 155.

The reception section 151 performs communication with the client 11 using a predetermined method and receives a request transmitted from the client 11. The reception section 151 supplies the received request to the genre determining section 152.

The genre determining section 152 determines the genre of the recommended music track (referred to below as recommended genre) based on the user specified mood and the user preference table included in the request from the client 11 and the compatibility table included in the compatibility DB 37. Then, the genre determining section 152 notifies the recommended music track determination section 153 of the user specified mood and of the recommended genre which has been determined.

The recommended music track determining section 153 determines the recommended music track which is recommended to a user based on the mood DB 35, the genre DB 36, the user specified mood and the recommended genre. Then, the recommended music track determining section 153 notifies the response generating section 154 of the determined recommended music track.

The response generating section 154 acquires the music data and the meta information of the recommended music track from the music DB 31 and acquires the music genre and the artist genre of the recommended music track from the genre DB 36. Then, the response generating section 154 generates a response which includes the music data, the meta information, and the genre information of the recommended music track and supplies the response to the transmission section 155.

The transmission section 155 performs communication with the client 11 using a predetermined method and transmits the response to the client 11.

### Music Request and Reproduction Process

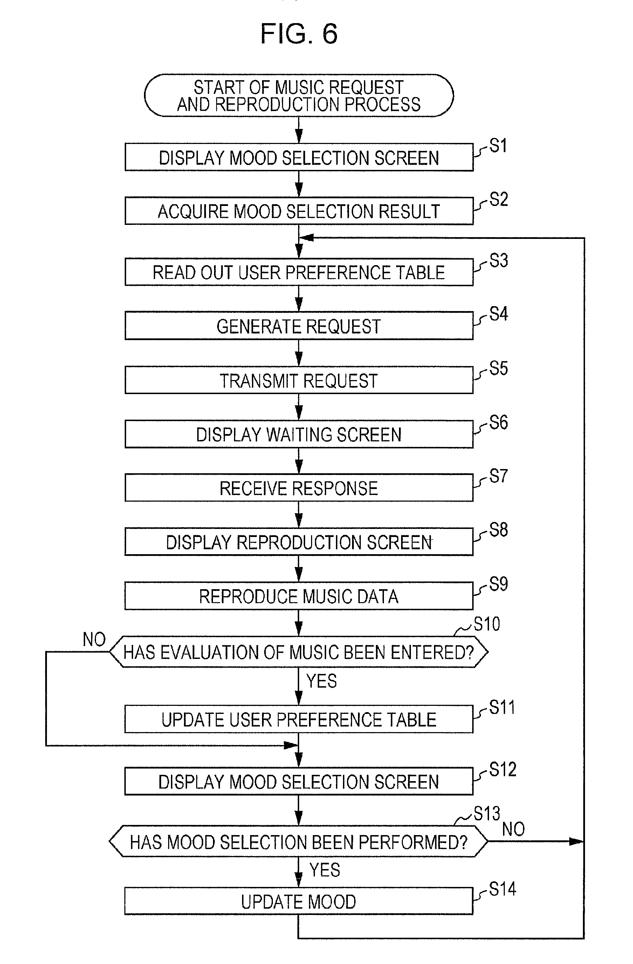

Next, a music request and reproduction process executed by the client 11 will be described with reference to the flow chart of Fig. 6. Here, in the client 11, using the input section 101, the process starts when the start of the music request and reproduction process is instructed and ends when the end of the music request reproduction process is instructed.

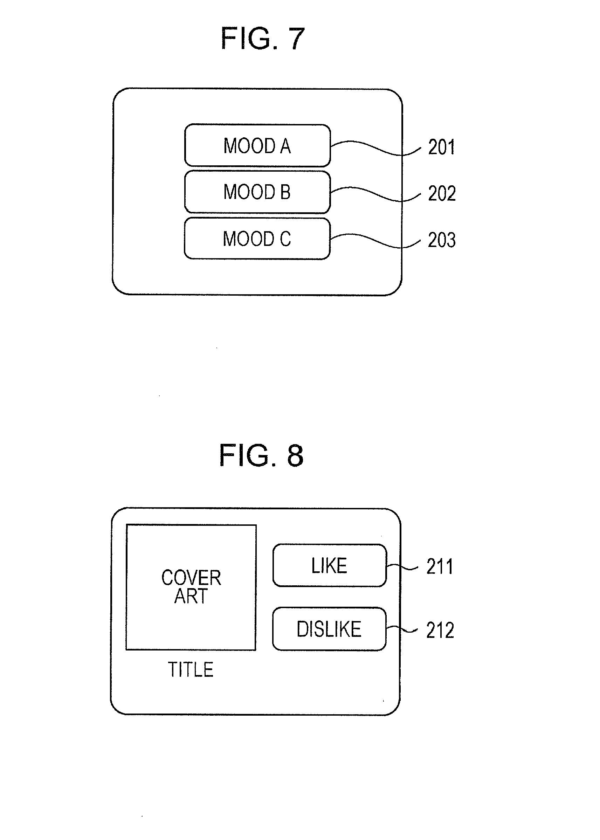

In step S1, the display section 107 displays a mood selection screen based on the control of the display control section 106. Fig. 7 shows an example of a mood selection screen. In the example, the buttons 201 to 203 for selecting the mood are listed and displayed. After that, the client 11 is in a state of waiting for an input from a user.

A user presses down on one out of the buttons 201 to 203 on the mood selection screen and a desired mood is selected using the input section 101.

Then, in step S2, the request generating section 103 acquires the mood selection result by the user from the input section 101.

In step S3, the request generating section 103 reads out the user preference table from the preference information DB 21.

In step S4, the request generating section 103 generates a request to the recommendation server 12. The mood selected by the user in the mood selection screen (user specified mood) and the user preference table are included in the request.

In step S5, the request generating section 103 transmits the generated request to the recommendation server 12 via the transmission section 104. In addition, the request generating section 103 notifies the display control section 106 that the request has been sent.

In step S6, the display section 107 displays a waiting screen which shows that the client 11 is waiting for a response from the recommendation server 12 based on the control of the display control section 106. In the waiting screen, an icon which shows that there is accessing of the network or the like is displayed, for example. After that, the client 11 is in a state of waiting for a response from the recommendation server 12.

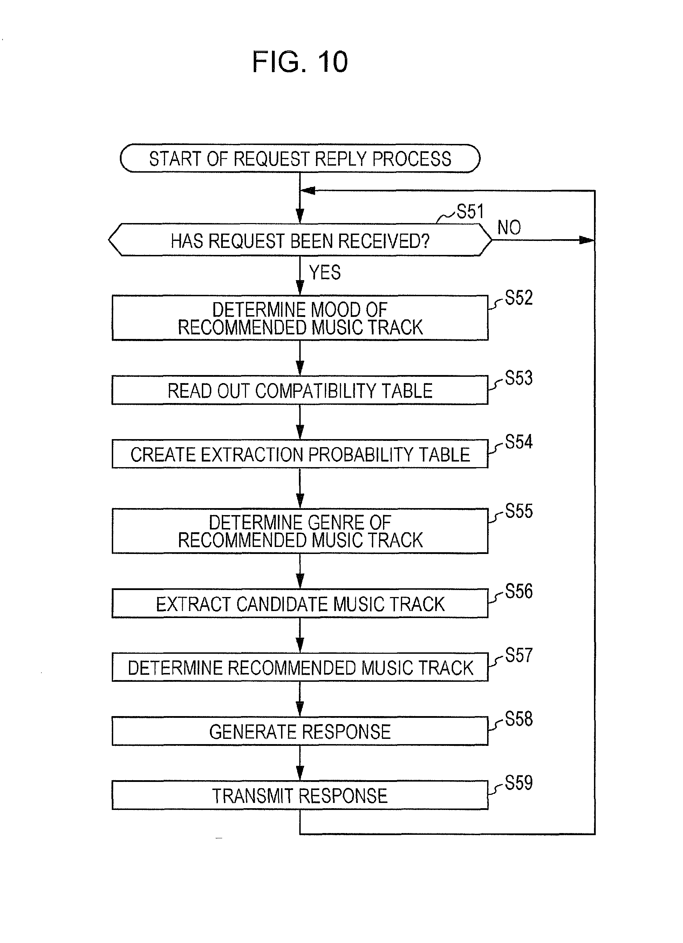

The recommendation server 12 receives the request from the client 11 in step S51 of Fig. 10 which will be described later, and in step S59, a response with regard to the request is transmitted.

Then, in step S7, the reception section 105 receives the response transmitted from the recommendation server 12. In addition, the reception section 105 supplies the genre information of the recommended music track included in the response to the preference information generating section 102, supplies the meta information to the display control section 106, and supplies the music data to the reproduction section 108.

In step S8, the display section 107 displays a reproduction screen based on the control of the display control section 106. Fig. 8 shows an example of a reproduction screen. In this example, the cover art and the title of the reproduced music are displayed and buttons 211 and 212 for inputting evaluation of the music are displayed.

In step S9, the reproduction section 108 reproduces the music data. Then, the reproduction section 108 supplies the sound data acquired as a result to the output section 109. The output section 109 performs output of sound based on the sound data or outputs the sound data to another device connected to the output section 109.

In step S10, the preference information generating section 102 determines whether or not an evaluation of the music has been entered. In a case where the button 211 or the button 212 are pressed down by the user using the input section 101 and the information is supplied from the input section 101 in the displaying of the reproduction screen of Fig. 8, the preference information generating section 102 determines that the evaluation of the music has been entered and the process proceeds to step S11.

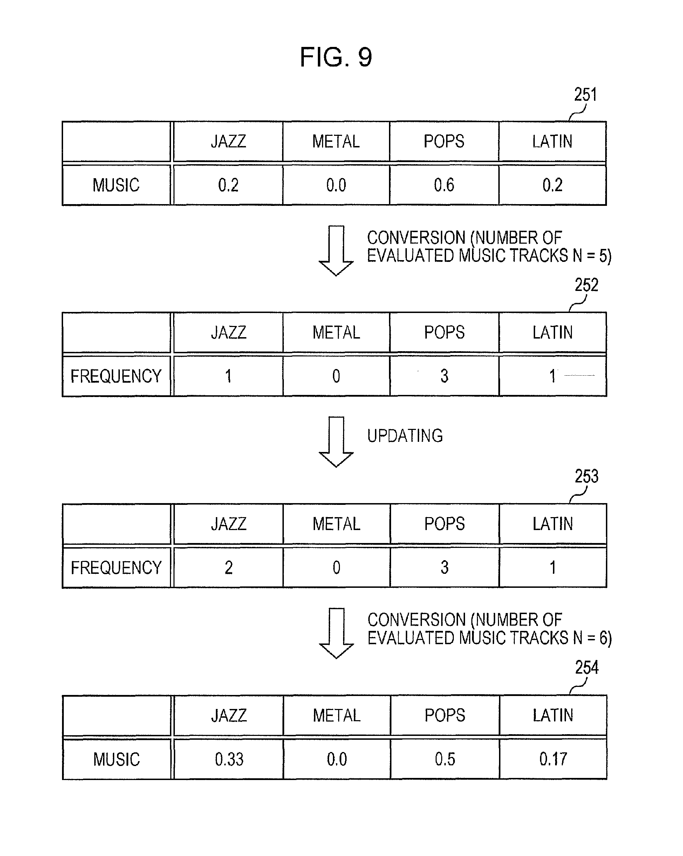

In step S11, the preference information generating section 102 updates the user preference table. Here, a specific example of an updating method of the user preference table will be described with reference to Fig. 9.

Fig. 9 shows an example of the preference with regard to the music genre being updated in the user preference table of Fig. 2 in a case where music genre of the recommended music track is jazz and the recommended music track is determined as a "like" by the user. Here, the number of evaluated music tracks before the evaluation is N=5.

First, the preference information generating section 102 converts a user preference table 251 into a frequency table 252 by multiplying the preference with regard to the respective music genres in the user preference table 251 by the number of evaluated music tracks up until now N=5. Accordingly, the frequency table 252 shows the frequency where the music of the respective music genres up until now was determined as a "like" by the user.

Next, the preference information generating section 102 updates the frequency table 252 with a frequency table 253 by incrementing the frequency of jazz, which is the music genre which was determined as a "like" by the user, from one to two. In addition, the preference information generating section 102 increments the number of evaluated music tracks N from five to six.

Here, in a case where the recommended music track was determined as a "dislike" by the user, by decrementing by one the frequency of the music genre which is determined as a "dislike", the preference information generating section 102 updates the frequency table and decrements by one the number of evaluated music tracks N.

Then, the preference information generating section 102 converts the frequency table 253 to a user preference table 254 by dividing the frequencies with regard to the respective music genres in the updated frequency table 253 by the updated number of evaluated music tracks N=6.

In this manner, the user preference table is updated. Then, after this, the request is performed based on the updated user preference table.

Accordingly, the preference in the user preference table shows the proportion of music of each of the music genres out of the music evaluated as a "like" by the user. Thus, the preference with regard to the respective music genres shows the probability that the music evaluated as a "like" by the user is each of the music genres.

Here, the preference with regard to the artist genre in the user preference table is also updated using the same method based on the artist genre of the recommended music track determined as a "like" or a "dislike".

In addition, initial values in the user preference table before the user performs an evaluation are, for example, set based on the genre of the music that the user holds in the client 11, or are set to default values.

After this, the process progresses to step S12.

On the other hand, in step S10, in a case where the button 211 or the button 212 in the display of the reproduction screen of Fig. 8 are not pressed down, the preference information generating section 102 determines that an evaluation of the music has not been entered, the process of step S11 is skipped, and the process proceeds to step S12.

In step S12, the client 11 displays the mood selection screen. Specifically, when the reproduction of the music data is completed, the reproduction section 108 notifies the display control section 106 of the completion of the reproduction of the music data. The display section 107 displays the same mood selection screen as that displayed in the process of step S1 for a predetermined period of time based on the control of the display control section 106.

In step S13, the request generating section 103 determines whether or not mood selection has been performed. In a case where the user performs mood selection using the input section 101 while displaying the mood selection screen and a selection result is acquired from the input section 101, the request generating section 103 determines that mood selection has been performed and the process proceeds to step S14.

In step S14, the request generating section 103 updates the mood. That is, the request generating section 103 updates the user specified mood from the current mood to the mood newly selected by the user.

After this, the process returns to step S3 and the processes from step S3 onward are executed. That is, the request is performed based on the mood updated by the user and reproduction of the music data included in the response with regard to the request is performed.

On the other hand, in step S13, in a case where it is determined that mood selection has not been performed, the process of step S14 is not performed, the process returns to step S3, and the processes from step S3 onward are executed. That is, the request is performed with the currently selected mood as it is and reproduction of the music data included in the response with regard to the request is performed.

### Request Reply Process

Next, a request reply process which is executed by the recommendation server 12 will be described with reference to the flow chart in Fig. 10 to correspond to the music request and reproduction process by the client 11 in Fig. 6. Here, in recommendation server 12, the process, for example, starts when the start of the request reply process is instructed and ends when the end of the request reply process is instructed. In addition, the recommendation server 12 is in a state of waiting for a request from the client 11 when starting the request reply process.

In step S51, the reception section 151 determines whether or not a request has been received from the client 11. The determination process is repeatedly executed until it is determined that a request has been received from the client 11, and in a case where it is determined that a request has been received from the client 11, the process proceeds to step S52.

In step S52, the genre determining section 152 determines the mood of the recommended music track. Specifically, the reception section 151 supplies the request received from the client 11 to the genre determining section 152. The genre determining section 152 extracts the user specified mood from the request and the user specified mood is determined as the mood of the recommended music track.

In step S53, the genre determining section 152 reads out the compatibility table from the compatibility DB 37.

In step S54, the genre determining section 152 creates an extraction probability table for determining the genre of the recommended music track based on the compatibility table and the user preference table included in the request from the client 11.

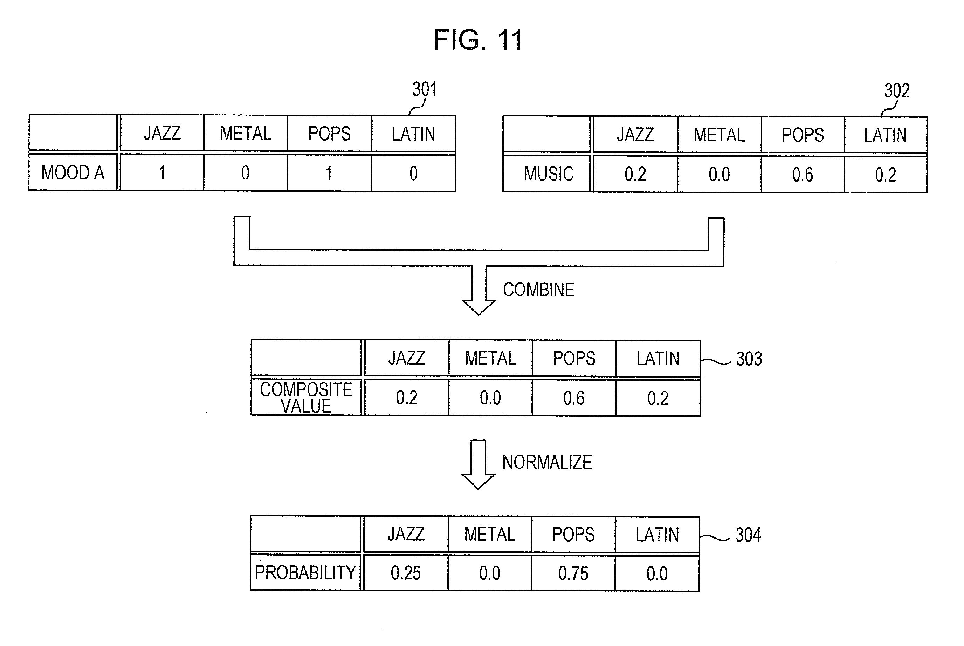

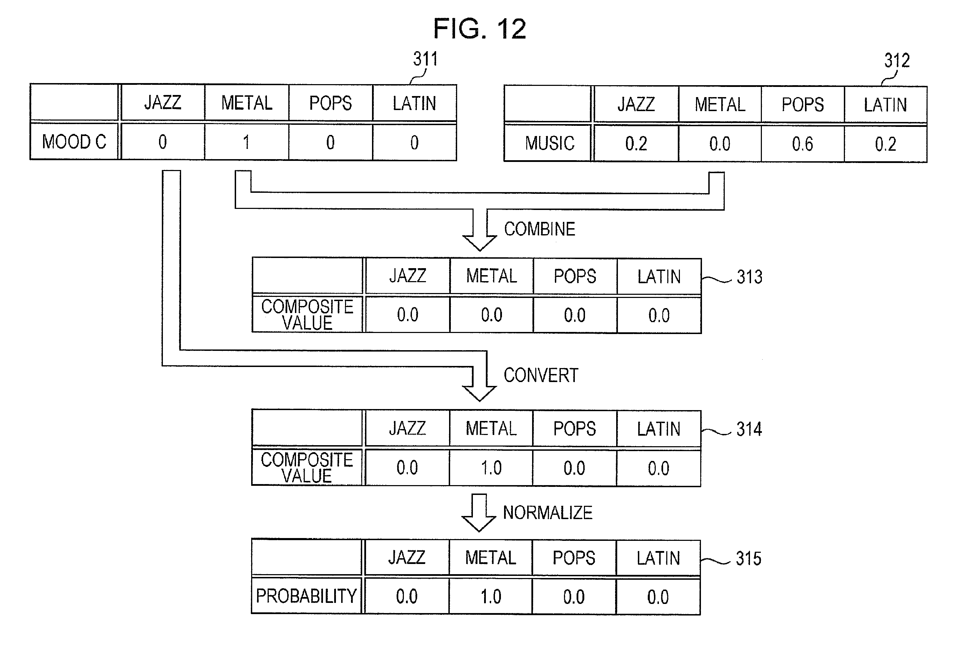

Here, a specific example of a creating method of an extraction probability table will be described with reference to Figs. 11 and 12. Here, Figs. 11 and 12 show examples where an extraction probability table is created based on the preferences with regard to the music genres of the user preference table.

First, a creating method of an extraction probability table will be described in a case where the mood A is specified by the user with reference to Fig. 11.

First, the genre determining section 152 creates a composite table 303 by combining the compatibility with regard to the mood A in a compatibility table 301 and the preference with regard to the music genre in a user preference table 302 for each genre. For example, a value with regard to jazz in the composite table 303 is set as 0.2 by combining the compatibility of jazz with regard to the mood A which is equal to one and the preference of the user with regard to jazz which is equal to 0.2.

Then, the genre determining section 152 creates an extraction probability table 304 by normalizing the values with regard to the respective genres in the composite table 303 so that the total of the values equals one. Specifically, since the total of the values in the composite table 303 is 0.8 (=0.2+0.0+0.6+0.0), the genre determining section 152 creates the extraction probability table 304 by dividing each value in the composite table 303 by 0.8.

Next, a creating method of an extraction probability table will be described in a case where the mood C is specified by the user with reference to Fig. 12.

First, the genre determining section 152 creates a composite table 313 by combining the compatibility with regard to the mood C in a compatibility table 311 and the preference with regard to the music genre in a user preference table 312 for each genre. However, in this case, the values in the composite table 313 are all zero.

Therefore, the genre determining section 152 changes from the composite table 313 to a composite table 314 which uses the compatibilities with regard to the mood C in the compatibility table 311 as they are.

Then, the genre determining section 152 creates an extraction probability table 315 by normalizing the values with regard to the respective genres in the composite table 314 so that the total of the values equals one. Here, in this example, since the total of the values in the composite table 314 is one, the values of the composite table 314 and the extraction probability table 315 are the same.

Here, an example is shown where the extraction probability table is created with regard to the music genre using the preference with regard to the music genre, but the extraction probability table may be created with regard to the artist genre using the preference with regard to the artist genre. In addition, two types of extraction probability tables of the extraction probability table with regard to the music genre and the extraction probability table with regard to the artist genre may be created.

Returning to Fig. 10, in step S55, the genre determining section 152 determines the genre (recommended genre) of the recommended music track based on the created extraction probability table.

For example, in a case where the music genre of the recommended music track is determined based on the extraction probability table 304 in Fig. 11, pops is selected with a probability of 75%, jazz is selected with a probability of 25%, and the other genres are not selected. Accordingly, there is a high probability of selecting a genre where the compatibility with regard to the mood specified by the user is one and the preference of the user is high, and the genre, where the compatibility with regard to the mood specified by the user is zero, is not selected. That is, the recommended genre is determined so that a genre, where the compatibility with the mood specified by the user and the preference of the user are high, is given priority. Furthermore, in other words, the recommended genre is determined so that a genre, where compatibility with the mood specified by the user is good and which is liked by the user, is given priority.

In addition, in a case where the music genre of the recommended music track is determined based on the extraction probability table 315 in Fig. 12, metal is selected with a probability of 100% and the other genres are not selected. Accordingly, in a case where the genres where compatibility with the mood specified by the user is good and genres which are liked by the user do not match, the recommended genre is selected randomly from the genres where compatibility with the mood specified by the user is good.

Here, in step S54, in a case where only the extraction probability table with regard to the music genres is created, only the recommended genre with regard to the music genre is determined using the extraction probability table. In addition, in a case where only the extraction probability table with regard to the artist genres is created, only the recommended genre with regard to the artist genre is determined using the extraction probability table. Furthermore, in a case where two types of extraction probability tables of the extraction probability table with regard to the music genre and the artist genre are created, the recommended genre with regard to the music genre and the recommended genre with regard to the artist genre are each determined using the respective extraction probability tables.

Then, the genre determining section 152 notifies the recommended music track determining section 153 of the user specified mood and of the recommended genre which has been determined.

In step S56, the recommended music track determining section 153 extracts a candidate music track. Specifically, the recommended music track determining section 153 searches the mood DB 35 and the genre DB 36 with the user specified mood and the recommended genre as keys. Then, the recommended music track determining section 153 extracts music, where the mood matches the user specified mood and the genre matches the recommended genre, as a candidate music track.

Here, at this time, in a case where only the recommended genre with regard to the music genre is determined, the music where the music genre matches with the recommended genre is the search target irrespective of the value of the artist genre. In addition, in a case where only the recommended genre with regard to the artist genre is determined, the music where the artist genre matches with the recommended genre is the search target irrespective of the value of the music genre. Furthermore, in a case where the recommended genre with regard to both the music genre and the artist genre is determined, music where both the music genre and the artist genre matches with the recommended genre may be the search target or music where at least one of the music genre and the artist genre matches with the recommended genre may be the search target.

Here, a search condition based on the music genre and the artist genre may be so that it is possible for the user to perform setting, for example, from the client 11, may be randomly set or in accordance with a predetermined rule by the recommendation server 12.

In step S57, the recommended music track determining section 153 randomly selects one music track from the extracted candidate music tracks and determines the recommended music track. The recommended music track determining section 153 notifies the recommended music track which has been determined to the response generating section 154.

In step S58, the response generating section 154 generates a response. Specifically, the response generating section 154 acquires the music data and the meta information of the recommended music track from the music DB 31 and acquires the music genre and the artist genre of the recommended music track of the recommended music track from the genre DB 36. Then, a response including the music data, the meta information, and the genre information of the recommended music track is generated by the response generating section 154 and supplied to the transmission section 155.

In step S59, the transmission section 155 transmits the response supplied from the response generating section 154, that is, the response with regard to the request from the client 11. The transmitted response is received by the client 11 in step S7 in Fig. 6 described above.

After that, the process returns to step S51 and the recommendation server 12 is in a state of waiting for a request. Then, the process, where a response including the music data and the like of the recommended music track is returned, is repeatedly executed in accordance with requests from the client 11.

As above, it is possible for music which matches the mood specified by the user to be continuously provided to the client 11 from the recommendation server 12 in the manner of BGM. In addition, it is possible that music which more closely matches the mood specified by the user is recommended due to music which belongs to a genre which has good compatibility with the mood being recommended based on the compatibility table and not just the mood specified by the user. Furthermore, it is possible to recommend music which matches the mood specified by the user and which the user likes by recommending the music with priority given to genres which are liked by the user based on the user preference table.

### 2. Modified Examples

Below, modified examples of the embodiment of the disclosure will be described.

### Modified Example 1

For example, the recommendation server 12 collects the evaluation results of users with regard to the recommended music tracks from the clients 11 and updates the compatibility table based on the aggregate result. For example, with regard to each combination of mood and genre, it is possible that the compatibility of the combination, where there are many times when the users evaluate with a "like", is set as high and the compatibility of the combination, where there are many times when the users evaluate with a "dislike", is set as low.

### Modified Example 2

In addition, by the recommendation server 12 holding a plurality of different compatibility tables which correspond to differences in preferences of users, and selecting a compatibility table, which corresponds to the preferences of users shown using the user preference table, the compatibility tables may be used in accordance with the preferences of the users. Due to this, recommendation of music which corresponds more closely to the preferences of the user is possible.

For example, compatibility tables for users who like metal and users who like jazz are prepared. Then, in the compatibility table for the users who like metal, the compatibility of rock with regard to the mood "soft" is set as one, and in the compatibility table for the users who like jazz, the compatibility of rock with regard to the mood "soft" is set as zero. Due to this, for example, in a case where the mood "soft" is set, it is possible that music such as a rock ballad is recommended with regard to the users who likes metal and is not recommended with regard to the users who likes jazz.

In addition, the assignment of the functions of the client 11 and the recommendation server 12 are not limited to the example above and it is possible for the functions to be appropriately set.

### Modified Example 3

For example, the recommendation server 12 collects the evaluation results of users with regard to the recommended music tracks from the clients 11 and may create and hold a user preference table for each user.

### Modified Example 4

In addition, for example, the compatibility table is provided from the recommendation server 12 to the client 11 and the recommended genre may be determined at the client 11. Then, the client 11 transmits the request including the user specified mood and the recommended genre to the recommendation server 12 and the recommendation server 12 extracts the candidate music tracks using the specified user specified mood and recommended genre as keys and determines the recommended music track.

### Modified Example 5

Furthermore, for example, it is possible that the client 11 has the functions of the recommendation server 12 and the client 11 recommends music which matches the mood specified by the user from the music held therein.

### Modified Example 6

In addition, in the description above, the example is shown where the recommended music track is provided one music track at a time from the recommendation server 12 to the client 11, but a plurality of the recommended music tracks may be provided to the client at the same time. In this case, the music data of all of the recommended music tracks may be provided to the client 11 at the same time or a list showing the music IDs of the recommended music tracks is provided to the client 11 and the music data may be provided whenever there is a request from the client 11. In addition, the determination method of the recommended music may be selected in accordance with a predetermined rule and not randomly selected from the candidate music tracks.

### Modified Example 7

Furthermore, in the embodiment of the disclosure, it is possible for only the compatibility table to be used without using the user preference table. In this case, compared to a simple case where the mood is specified and the music is recommended, it is possible to recommended music which more closely matches the mood specified by the user.

### Modified Example 8

In addition, learning of categories other than mood is performed in the recommendation server 12 based on the attribute amount of the music data and music may be recommended based on an attribute value specified by a user from among a plurality of attribute values of the attribute. For example, the use of melody, rhythm, tempo, speed, or the like as categories may be considered. In addition, for example, a plurality of types of categories such as mood and rhythm may be used.

### Modified Example 9

Furthermore, the recommended music track may be determined using an attribute other than genre. For example, the use of categories classified by the year when a music track was released, the age, sex, or hometown of the artist who played the music track, presence or absence of vocals, configuration of instruments may be considered. In addition, for example, a plurality of types of categories such as genre and year of release may be used.

### Modified Example 10

In addition, as inputting of evaluation with regard to the music track by the user, other than "like" and "dislike", for example, the use of inputting of evaluation (explicit feedback) using numerical values or inputting of evaluation (implicit feedback) based on operational history such as reproduction, stopping, high or low volume, repeating of reproduction, skipping may be considered.

### Modified Example 11

Furthermore, the disclosure is able to be applied in cases of content other than music being recommended. For example, it is possible to be applied also in cases where video content such as movies, television programs, or video clips, or content such as photos, games, electronic books, or the like is recommended.

### Configuration Example of Computer

A series of processes of the client 11 and the recommendation server 12 described above is able to be executed using hardware and able to be executed using software. In a case where the series of processes are executed using software, a program which configures the software is installed on a computer. Here, as the computer, a computer with built-in dedicated hardware, a general purpose computer which is able to execute various functions by various programs being installed, and the like are included.

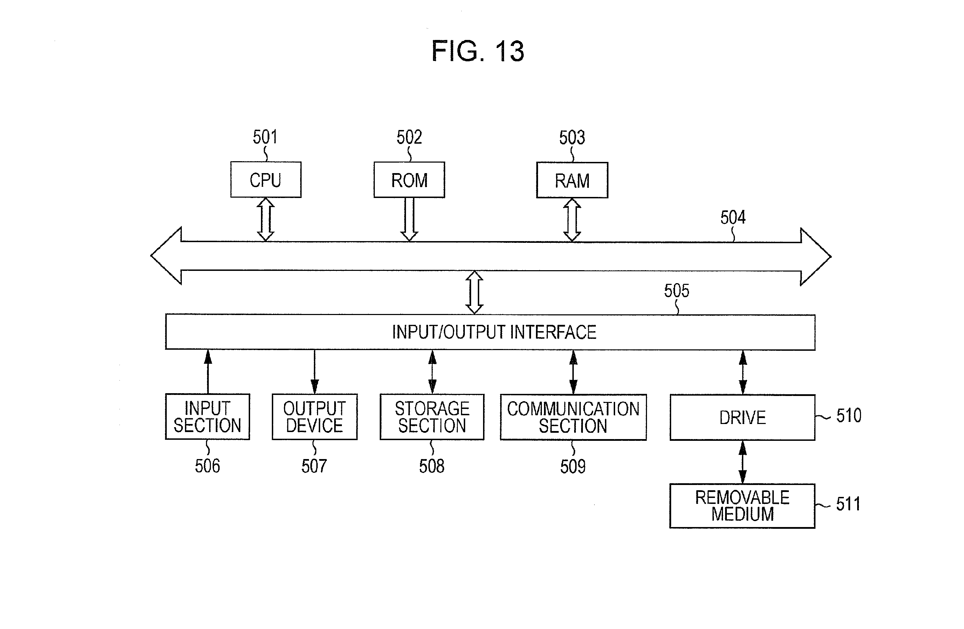

Fig. 13 is a block diagram illustrating a configuration example of hardware of a computer which executes the series of processes described above using a program.

In the computer, a CPU (Central Processing Unit) 501, the ROM (Read Only Memory) 502, and the RAM (Random Access Memory) 503 are connected to each other via a bus 504.

An input/output interface 505 is connected to the bus 504. An input section 506, an output device 507, a storage section 508, a communication section 509, and a drive 510 are connected in the input/output interface 505.

The input section 506 is formed from a keyboard, a mouse, a microphone, or the like. The output device 507 is formed from a display, a speaker, or the like. The storage section 508 is a hard disk, a non-volatile memory, or the like. The communication section 509 is formed from a network interface or the like. The drive 510 drives a removable medium 511 such as a magnetic disc, an optical disc, a magneto optical disc, a semiconductor memory, or the like.

In the personal computer configured in this manner, the CPU 501 performs the series of processes described above, for example, using a program stored in the storage section 508 being loaded into the RAM 503 via the input/output interface 505 and the bus 504 and executed.

The program executed by the computer (the CPU 501) is able to be provided by, for example, being recorded in the removable medium 511 which is a package medium or the like. In addition, it is possible for the program to be provided via a wired or a wireless transmission medium such as a local area network, the internet, or digital satellite broadcasting.

In the computer, it is possible for the program to be installed in the storage section 508 via the input/output interface 505 by the removable medium 511 being mounted in the drive 510. In addition, it is possible for the program to be received by the communication section 509 via a wired or a wireless transmission medium and installed in the storage section 508. Further, it is possible for the program to be installed in advance in the ROM 502 or the storage section 508.

Here, the program executed by the computer may be a program where processing is performed in a time series manner in line with the order described in the specifications or may be a program where the processing is performed in parallel or at a necessary timing such as when a request is performed.

In addition, in the specifications, the term system has a meaning of a plurality of devices, or an entire device configured by units and the like.

Furthermore, the embodiments of the disclosure are not limited to the embodiment described above but various modifications are possible within the scope which does not depart from the concept of the disclosure.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

The present disclosure contains subject matter related to that disclosed in Japanese Priority Patent Application JP 2010-250615 filed in the Japan Patent Office on November 9, 2010, the entire contents of which are hereby incorporated by reference.

## Claims

1. An information processing device comprising:
an acquisition unit configured to acquire a user specified attribute value which is an attribute value specified by a user from a plurality of attribute values of an attribute assigned based on a characteristic amount of content; and
a category determining unit configured to determine a recommended category which is a category which recommended content belongs to based on compatibility of a plurality of categories and the user specified attribute value in compatibility information which shows compatibilities of a plurality of categories for categorizing content and the plurality of attribute values.

2. The information processing device according to Claim 1, wherein the category determining unit determines the recommended category based on compatibility of the plurality of categories and the user specified attribute value in the compatibility information and based on preference information which shows preferences of the user with regard to the plurality of categories.

3. The information processing device according to Claim 2, wherein the compatibility information shows a compatibility of the plurality of categories and the plurality of attribute values,
wherein the preference information shows a preference of the user with regard to the plurality of categories, and
wherein the category determining unit determines the recommended category with the category, where the compatibility with the user specified attribute value and the preference of the user are high, given priority.

4. The information processing device according to Claim 2, wherein the category determining unit selects the compatibility information which corresponds to the preferences of the user shown in the preference information from a plurality of the compatibility information and determines the recommended category based on the selected compatibility information.

5. The information processing device according to Claim 1, further comprising:
a recommendation content determining unit configured to determine content to be recommended from among content which belongs to the recommended categories and is assigned with the user specified attribute value.

6. The information processing device according to Claim 5, wherein the acquisition unit acquires an evaluation by the user with regard to the recommended content, and
a compatibility information updating unit which updates the compatibility information based on the evaluation by the user is further provided.

7. The information processing device according to Claim 2, wherein the acquisition unit acquires the user specified attribute value and the preference information from another information processing device, and
a recommendation content determining unit which determines content to be recommended from among content which belongs to the recommended categories and is assigned with the user specified attribute value, and a transmission unit configured to transmit the recommended content to the other information processing device are further provided.

8. The information processing device according to Claim 1, further comprising:
a transmission unit configured to transmit information which includes the user specified attribute value and the recommended category to another information processing device; and
a reception unit configured to receive content selected from among content which belongs to the recommended categories and is assigned with the user specified attribute value from the other information processing device.

9. The information processing device according to Claim 8, wherein the reception unit receives compatibility information from the other information processing device.

10. An information processing method comprising:
acquiring a user specified attribute value which is an attribute value specified by a user from a plurality of attribute values of an attribute assigned based on a characteristic amount of content; and
determining a recommended category, which is a category which recommended content belongs to, based on compatibility of a plurality of categories and the user specified attribute value in compatibility information which shows the compatibility of a plurality of categories for categorizing content and the plurality of attribute values, using an information processing device.

11. A program which makes a computer execute:
acquiring a user specified attribute value which is an attribute value specified by a user from a plurality of attribute values of an attribute assigned based on a characteristic amount of content; and
determining a recommended category which is a category which recommended content belongs to based on compatibility of a plurality of categories and the user specified attribute value in compatibility information which shows compatibilities of a plurality of categories for categorizing content and the plurality of attribute values.

12. An information processing system comprising:
a first information processing device; and
a second information processing device,
wherein the first information processing device includes
an acquisition unit configured to acquire a user specified attribute value which is an attribute value specified by a user from a plurality of attribute values of an attribute assigned based on a characteristic amount of content,
a first transmission unit configured to transmit information which includes the user specified attribute value to the second information processing device, and
a first reception unit configured to receive content transmitted from the second information processing device, and
wherein the second information processing device includes
a second reception unit configured to receive information which includes the user specified attribute value transmitted from the first information processing device,
a category determining unit configured to determine a recommended category which is a category which recommended content belongs to based on compatibility of a plurality of categories and the user specified attribute value in compatibility information which shows the compatibility of a plurality of categories for categorizing content and the plurality of attribute values,
a recommendation content determining unit configured to determine content to be recommended from among content which belongs to the recommended categories and assigned with the user specified attribute value, and
a second transmission unit configured to transmit the recommended content to the first information processing device.

13. An information processing method comprising:
acquiring a user specified attribute value which is an attribute value specified by a user from a plurality of attribute values of an attribute assigned based on a characteristic amount of content, and transmitting information which includes the user specified attribute value to a second information processing device, using a first information processing device;
receiving information which includes the user specified attribute value transmitted from the first information processing device, determining a recommended category which is a category which recommended content belongs to based on compatibility of a plurality of categories and the user specified attribute value in compatibility information which shows the compatibilities of a plurality of categories for categorizing content and the plurality of attribute values, determining content to be recommended from among content which belongs to the recommended categories and assigned with the user specified attribute value, and transmitting the recommended content to the first information processing device, using the second information processing device; and
receiving content transmitted from the second information processing device using the first information processing device.

14. An information processing system comprising:
a first information processing device; and
a second information processing device,
wherein the first information processing device includes
an acquisition unit configured to acquire a user specified attribute value which is an attribute value specified by a user from a plurality of attribute values of an attribute assigned based on a characteristic amount of content,
a category determining unit configured to determine a recommended category which is a category which recommended content belongs to based on compatibility of a plurality of categories and the user specified attribute value in compatibility information which shows compatibilities of a plurality of categories for categorizing content and the plurality of attribute values,
a first transmission unit configured to transmit information which includes the user specified attribute value and the recommended category to the second information processing device, and
a first reception unit configured to receive content transmitted from the second information processing device, and
wherein the second information processing device includes
a second reception unit configured to receive information which includes the user specified attribute value and the recommended category transmitted from the first information processing device,
a recommendation content determining unit configured to determine content to be recommended from among content which belongs to the recommended categories and assigned with the user specified attribute value, and
a second transmission unit configured to transmit the recommended content to the first information processing device.

15. An information processing method comprising:
acquiring a user specified attribute value which is an attribute value specified by a user from a plurality of attribute values of an attribute assigned based on a characteristic amount of content, determining a recommended category which is a category which recommended content belongs to based on compatibility of a plurality of categories and the user specified attribute value in compatibility information which shows compatibilities of a plurality of categories for categorizing content and the plurality of attribute values, and transmitting information which includes the user specified attribute value and the recommended category to a second information processing device, using a first information processing device;
receiving information which includes the user specified attribute value and the recommended category transmitted from the first information processing device, determining content to be recommended from among content which belongs to the recommended categories and assigned with the user specified attribute value, and transmitting the recommended content to the first information processing device; and
receiving content transmitted from the second information processing device using the first information processing device.
